# EUROPEAN PATENT SPECIFICATION

(11) **EP 2 770 271 B1**
(45) Date of publication and mention of the grant of the patent: **11.09.2019**
(21) Application number: 13156215.9
(22) Date of filing: 21.02.2013
(51) Int. Cl.: B09B 1/00, F24S 20/64, F24S 25/20, F24S 25/33, F24S 25/67, F24S 80/70, H02S 30/10

(54) **Surface construction**
Oberflächenkonstruktion
Construction de surface

(43) Date of publication of application: 27.08.2014
(73) Proprietor: HaskoningDHV Nederland B.V., 3818 EX Amersfoort (NL)
(72) Inventor: Steenhof, Vincent, 3828 RJ IIoogland (NL)
(74) Representative: Nederlandsch Octrooibureau

(56) References cited:
- EP-A2- 2 533 300
- DE-U1- 20 314 665
- FR-A1- 2 488 377
- FR-A1- 2 957 953
- JP-A- 2000 234 425
- JP-A- 2003 336 357
- JP-A- 2011 230 078
- US-A- 5 571 338
- US-A1- 2011 232 715
- US-A1- 2011 290 305
- DATABASE WPI Section EI, Week 201010 Thomson Scientific, London, GB; Class U12, AN 2010-A91138 XP002671926, -& KR 100 928 950 B1 (HANBITKIJEON CO LTD) 30 November 2009 (2009-11-30)

## Description

### Field of the invention

The present invention relates to a surface construction.

### Background

It is known in the art that landfills present a potential threat for the environment. A landfill typically discharges gases by reactions within the landfill. Also, effluent from the landfill due to rainfall can enter the environment. From such effluent various (potentially) harmful substances may thus spread into the environment.

To prevent such harmful effects of landfills, it is known to seal the landfill by a stack of layers. In this manner, discharged gases can be collected and inflow of rainwater into the landfill can be blocked.

In the prior art, the stack of layers consist of a support layer with a drainage for landfill gases, a sealing layer, a drainage layer for rainwater and a cultivation layer.

The support layer with drainage for landfill gases is deposited directly on the landfill, possibly after leveling the top. The support layer is then covered by the sealing layer which prevents that landfill gases escape form the support layer.

On top of the sealing layer, the drainage layer for rainwater is deposited. Finally as top layer, a cultivation layer is deposited. The cultivation layer provides that a vegetation may be present on the landfill. The cultivation layer protects the lower positioned sealing layer against weather conditions. The vegetation protects the cultivation layer against erosion.

In some countries like the Netherlands, it is statutory that the sealing layer comprises a lower layer consisting either a sealing bentonite-type clay layer or a leakage detection layer and an upper layer consisting of a gas- and water-impermeable foil.

The requirements for the durability of the seal of the landfill are high since the landfill is usually permanent.

Additionally, sealed landfills occupy large areas that currently can not be used for many useful purposes. Since the seal must remain intact over long times, placing heavy loads on the surface of the sealing layer or performing groundwork in the cultivation layer is undesirable. For that reason most sealing layers are covered by a (low mass) vegetation of grass that can be maintained easily and has a low risk of damaging the sealing layer, in particular, on the slopes of the landfill.

Furthermore, by the limited options for the cultivation layer, re-use of the landfill area is therefore low and in terms of costs inefficient.

It is an object of the invention to provide a sealing of landfills that overcomes or mitigates the disadvantages from the prior art.

US2011232715 A1 discloses an assembly having an interconnected array of photovoltaic modules, where each of the PV modules is defined by a module outer perimeter portion. The perimeter portion includes upper and lower edge portions and side edge portions. Interlocking features along the perimeter portion distribute uplift forces to adjacent PV modules.

### Summary of the invention

The object of the invention is achieved by a surface construction in accordance with claim 1.

Advantageously, the surface construction provides a replacement of the stack of layers, which could allow to omit some or all of the stacked layers. Additionally, the surface construction is capable to deliver relatively high amounts of energy due to the relatively large photovoltaic area on the surface construction. A substantial area of the landfill is used for photovoltaic energy conversion. In this sense, the re-use of the landfill is strongly improved. Further, the surface construction has the advantage that it provides a sealing on the top layer of the landfill, thus providing easy access if any repair would be needed. Moreover, due to the flexibility of the joints between the panels in the construction the construction is capable to comply with a typical setting of the landfill. Also, in an embodiment where the surface construction is substantially water- and/or gas-tight, a cultivation layer and associated vegetation can be omitted.

Advantageous embodiments are further defined by the dependent claims.

### Brief description of drawings

Below, the invention will be explained with reference to some drawings. The drawings are intended for illustration purposes only without limitation of the scope of protection as defined by the subject matter of the appended claims.
Figure 1 shows a top view of a surface construction according to an embodiment of the invention;
Figures 2a, 2b show a cross-section of a panel for use in the construction according to an embodiment;
Figure 3 shows an example of a panel layout according to an embodiment of the invention;
Figure 4 shows a top view of a surface construction according to an embodiment of the invention;
Figure 5a shows a cross-sectional view, along a horizontal direction, of the surface construction according to an embodiment;
Figure 5b shows a cross-sectional view along a horizontal direction, of the surface construction according to a further embodiment;
Figure 6 shows a cross-sectional view along a vertical direction of the surface construction according to an embodiment;
Figure 7 show a schematic cross-section of a landfill with a surface construction in accordance with the present invention.

Detailed description of embodiments.

In the following figures, the same reference numerals refer to similar or identical components in each of the figures.

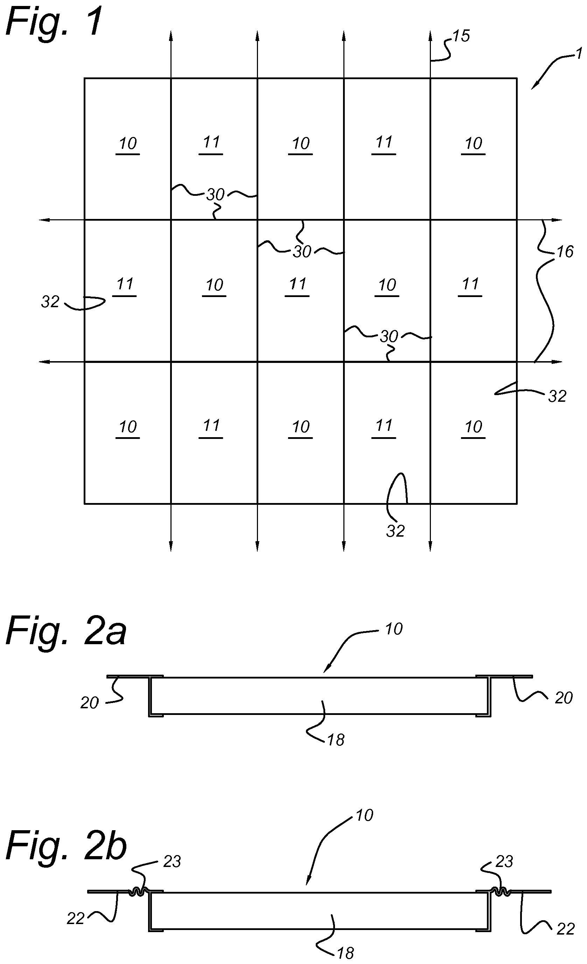

Figure 1 shows a top view of a surface construction according to an embodiment of the invention.

In an embodiment, the surface construction 1 is a planar construction of arbitrary shape for example rectangular. The surface construction comprises a plurality of panels 10, 11 that are arranged in a matrix, adjacent to each other. Each panel is substantially impermeable for water and/or gas, i.e. waterproof and/or gastight.

The panels 10, 11 have rectangular shape and are interconnected to each other at their respective sides.

The surface construction is arranged to be mounted on a surface of a landfill. Substantially each panel is arranged as solar panel configured to capture light from the Sun.

According to the invention, each panel 10; 11 has a peripheral edge parallel to the surface of the panel, and the panels 10; 11 are coupled to each other by overlapping interconnections 30 of the peripheral edges of each panel 10 with one or more adjacent panels 11.

In an embodiment, the panels are arranged in a staggered manner, with panels in an alternating order being in an upper or lower position, in such a way that the interconnection between adjacent panels 10, 11 is created by overlap of the peripheral edges of the panels. Optionally, an intermediate coupling element (not shown) can be arranged between two adjacent panels for providing an auxiliary surface for the interconnection.

According to the invention, the interconnection 30 of the peripheral edges is sealed by a polymer layer which is resilient and provides a sealing that is substantially water- and gas-tight. End portions 32 of the surface construction comprise sealing bodies 32 to seal the periphery of the construction.

Advantageously, the present invention provides a sealing of the landfill that prevents outflow of gases from the interior of the landfill. Gases remain below the surface construction in a state-of-the-art gas collecting layer below the surface layer of the landfill which is coupled to a removal system that removes gases by maintaining a reduced pressure in the gas collecting layer. The surface construction may optionally comprise an additional system that prevents presence and accumulation of gases between the landfill surface and the surface construction, should gases from the landfill leak from the gas collecting layer to the surface of the landfill.

Additionally, since the panels and the interconnections are waterproof, the surface construction provides that rainwater can not enter the surface of the landfill that is covered by the surface construction 1. Advantageously, this prevents the creation of potentially harmful effluents from the landfill. Moreover, since the area covered by the surface construction is typically large, the application for solar panels in the surface construction provides a relative improvement over the comparatively poor utilization of the landfill according to the prior art.

The polymer layer is resilient and provide a flexible joint between adjacent panels to overcome small dislocation of a panel.

The surface construction 1 comprises means 15, 16 for mounting the construction to a mounting basis on the landfill.

Figures 2a, 2b show a cross-section of a panel for use in the construction according to an embodiment.

The solar panel 10, 11 consist of an insulated rectangular volume 12 in which the photovoltaic elements and supporting elements such as a front glass layer and a conductive circuit (e.g. comprising a busbar system or a patterned conductive back sheet) to connect the solar cells to an external electrical circuit (not shown) are positioned, further comprises at the periphery of its volume 18 a peripheral edge 20. The peripheral edge 20 provides a peripheral surface that is parallel to the front surface of the solar panel and extends around the perimeter.

The peripheral edge may be integral with the frame of the solar panel. Alternatively, the peripheral edge may be embodied as either a covering strip mounted to and sealed on the edges of the front surface and extending from the solar panel parallel to the front surface, or the peripheral edge may be a separate frame section which can be mounted around the side walls of the solar panel with a sealed connection between the walls of the panel and the peripheral edge section.

In figure 2b the solar panel 10; 11 comprises a peripheral edge that comprises a flexible portion 23 that joins the flat outer edge portion 22 with the volume 18 of the solar panel. The flexible portion 23 provides a hinge for panels that are interconnected at the peripheral edges. Such a hinge allows a rearrangement of the panels, should the surface construction deform.

In a preferred embodiment, the hinge section is water- and gas-tight.

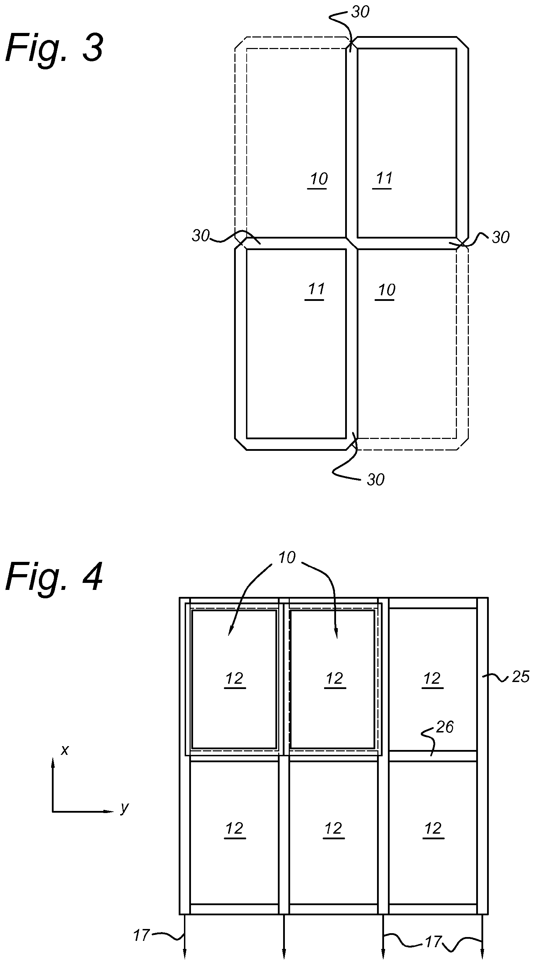

Figure 3 shows an example of a panel layout according to an embodiment of the invention.

Panels 10, 11 are positioned adjacent to each other. One panel 10 is arranged at a lower level and the adjacent panel 11 is positioned in an upper level such that the peripheral edges 20; 22 of the two panels 10, 11 overlap each other. In the overlapping portion 30 a polymer layer which is a resilient polymer is deposited to seal the peripheral edge of the lower level panel 10 to the peripheral edge of the upper level panel 11.

It is noted that for rectangular panels the corners of the peripheral edges of the panels 10, 11 may be cut under 45° to obtain abutment of panels 10; 11 placed diagonally to each other at the same lower or upper level.

It is noted that the skilled person will appreciate that an alternative arrangement of the panels in different levels with respect to each other is conceivable to obtain overlap of the peripheral edges.

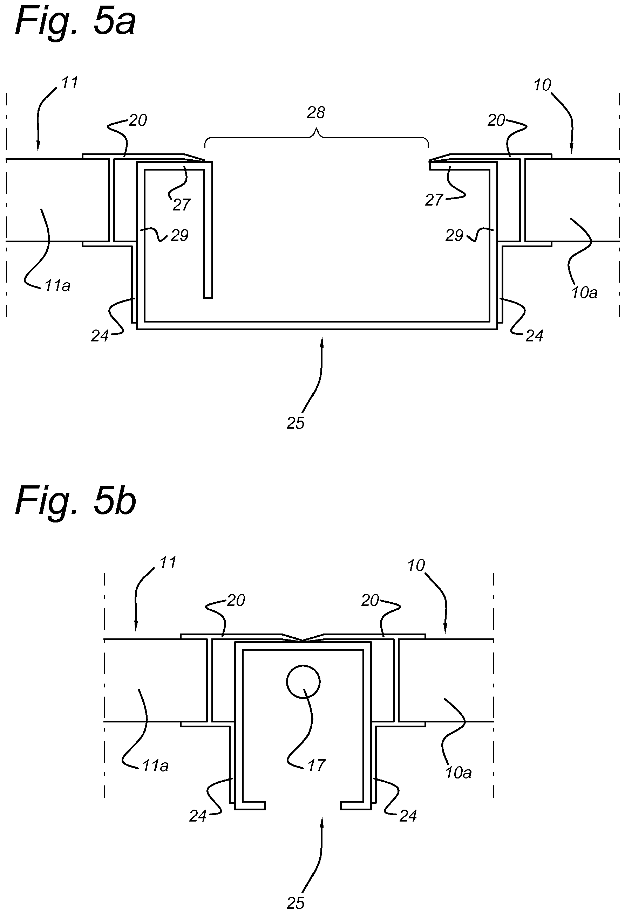

Figure 4 shows a top view of a surface construction according to an embodiment of the invention.
In an embodiment, the surface construction comprises a framework in which the plurality of solar panels 10; 11 are mounted. The framework is for example an orthogonal framework that comprises longitudinal beams 25 extending in a first direction X and cross-bars 26 that extend in a second direction Y perpendicular to the first direction.
The longitudinal beams 25 preferably extend over a full length of the surface construction. The cross-bars 26 are parallel to each other and extend between each pair of parallel longitudinal beams 25. Within each area 12 enclosed by two longitudinal beams 25 and two adjacent parallel crossbars between said longitudinal beams, a solar panel 10; 11 is mounted. For reason of clarity the outline of only two adjacent panels 10 are shown. The peripheral edge of each panel 10; 11 is arranged to overlap with the beams and cross-bars to obtain an interconnection.
The framework is provided with means 17 for mounting the framework to an external mount (not shown). The external mount could be a foundation on, or adjacent to, the landfill. Also the external mount could be a geogrid (i.e. a wire mesh laid out over the surface under the surface construction).
The means 17 for mounting comprise, but are not limited to, wires, bars or rods.
The longitudinal beam 25 may comprise a drain channel that runs along the beam. Such a drain channel provides a guide for rain water to flow from the surface construction to a drainage outside of the landfill. Also, as shown in figure 5a below, the longitudinal beam may comprise a conduit for wiring.
The longitudinal beams 25 and cross-bars 26 may comprise a walkway surface in between neighboring solar panels. The walkway surface may simplify maintenance of the surface construction 1.
Without limitation to the invention, the beams and/or cross bars may be manufactured by plate bending, or alternatively by (injection) moulding or extrusion.

Figure 5a shows a cross-sectional view, along a horizontal direction, of the surface construction 1 of Figure 4.
The cross-section shows the longitudinal beam 25 and adjacent solar panels 10, 11. The solar panels 10, 11 each comprise a peripheral edge 20 that is parallel to the front surface (i.e. the glass layer 10a, 11a) of the panel and a secondary edge 24 that is perpendicular to the front surface and extends along the solar panel. The longitudinal beam 25 has a box -shaped cross-section and interconnects with its vertical sidewalls 29 to the secondary edge 24 of each adjacent panel 10, 11. The edges 27 of the top portion of the longitudinal beam are interconnected with the peripheral edge 20 of the panels. Further the top of the longitudinal beam comprises an opening 28 which creates an open drainage channel inside the longitudinal beam 25.
Figure 5b shows a cross-sectional view along a horizontal direction, of the surface construction according to a further embodiment. In this drawing the longitudinal beam 25 is shown in between solar panels, interconnected by the peripheral edges 20. Within the beam 25, the means 17 for mounting to an external mount. The mounting means 17 may be a cable, wire, rod or bar running along the length of the longitudinal beam. The beam 25 (and also cross-bar 26) may have an opening at its bottom end.

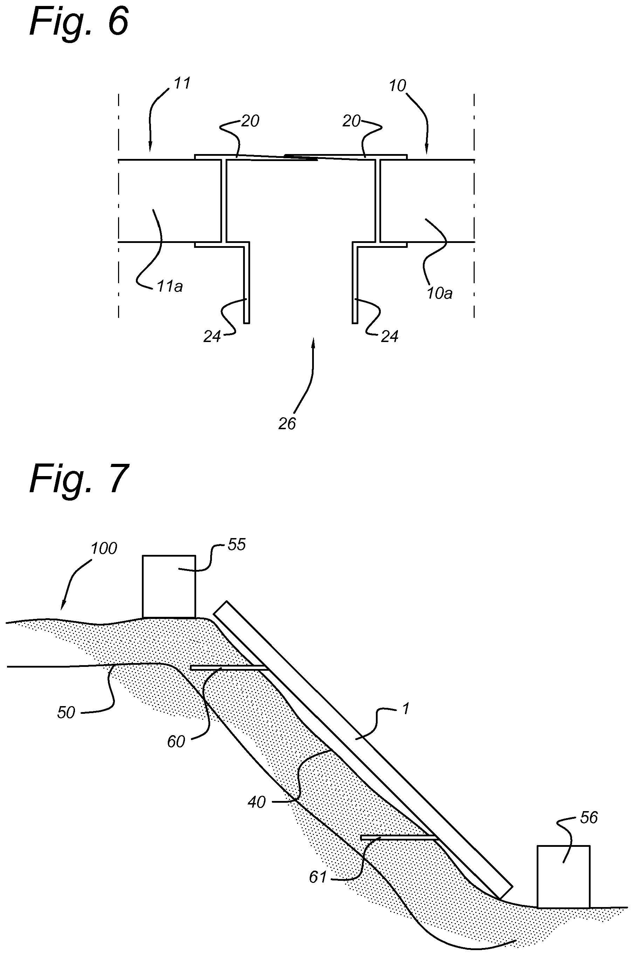

Figure 6 shows a cross-sectional view along a vertical direction of the surface construction 1 according to an embodiment.
In this drawing solar panels 10, 11 are shown, interconnected by the peripheral edges 20, thus forming by their profile a beam cross-section.
Figure 7 show a schematic cross-section of a landfill with a surface construction in accordance with the present invention.
Because the solar panels 10, 11 should be oriented and inclined towards the Sun (and its trajectory along the sky) the surface construction 1 according to the present invention is preferably mounted on the slopes 40 of a landfill 100.
Preferably, the surface construction rests with lower portion on a ground level. The surface construction can be mounted on or attached to external foundation bodies or posts 55, 56 and (additionally or alternatively) on (isolated) anchoring posts 60, 61 in the surface layer of the landfill.

In this manner the surface construction seals the slopes of the landfill to prevent uncontrolled release of gases from the landfill. Also, the surface construction prevents inflow of rainwater into the landfill slopes.
In an embodiment, additional blind panels can be connected in the surface construction mixed in any order with the solar panels. Such blind panels may be used for different purposes such as a billboard etc.
It will be appreciated by the skilled person that the surface construction of the present invention can be beneficially used in other relatively cost ineffective landscape elements or structures than a landfill, such as a slope of a levee or bank wall, a sound barrier wall along a road, a top of a building or storage tank, etc.
It will be apparent to the person skilled in the art that other embodiments of the invention can be conceived and reduced to practice without departing from the true spirit of the invention, the scope of the invention being limited only by the appended claims. The above description and drawings are not intended to limit the scope of the invention.

## Claims

1. Surface construction (1) for covering a surface, comprising a plurality of substantially rigid rectangular solar panels (10,11) comprising solar cells, the solar panels (10,11) being arranged adjacent to each other in a substantially planar arrangement
**characterized by**
each solar panel (10,11) having a peripheral edge (20,22) parallel to the surface of the solar panel (10,11), and the solar panels (10,11) being coupled to each other by overlapping interconnections (30) of the peripheral edges (20,22) of each solar panel (10,11) with one or more adjacent solar panels (10,11),
wherein the overlapping peripheral edge (20,22) of the panel comprises a flexible joint that is water- and gas-tight; the interconnection of the peripheral edges (20,22) being sealed by a polymer layer which is resilient and provides a water- and gas-tight sealing.

2. Surface construction (1) according to claim 1, wherein the interconnection comprise an overlap of the peripheral edges in between adjacent solar panels (10,11) .

3. Surface construction (1) according to claim 1, wherein the interconnection comprises a coupling element that is coupled between the peripheral edge (20,22) of one solar panel (10,11) and the peripheral edge (20,22) of an adjacent solar panel (10,11), wherein the coupling element is positioned in between the peripheral edge (20,22) of the one solar panel (10,11) and the peripheral edge (20,22) of the other solar panel (10,11), and the connection of the coupling element with each panel (10,11) comprises an overlap.

4. Surface construction (1) according to claim 1, wherein each panel (10,11) is substantially impermeable for water and/or gas.

5. Surface construction (1) according to any one of the preceding claims, wherein the surface construction comprises a framework of a plurality of longitudinal beams (25) and a plurality of cross-bars (26), wherein the longitudinal beams extend parallel to each other in a first direction and the cross-bars extend in second direction perpendicular to the first direction and interconnect a pair of adjacent longitudinal beams, wherein each panel (10,11) is positioned in the framework between a pair of longitudinal beams (25) and a pair of cross-bars (26), and the interconnections are formed in the first direction between each peripheral edge (20,22) of the panel (10,11) and an adjacent cross-bar (26), and in the second direction between each peripheral edge (20,22) and an adjacent longitudinal beam (25).

6. Surface construction (1) according to claim 5, wherein the longitudinal beam (25) comprises a drain running in the length of the beam.

7. Surface construction (1) according to claim 5 or 6, wherein the longitudinal beam (25) comprises a walkway on its surface.

8. Surface construction (1) according to any one of the preceding claims 5 - 7, wherein the surface construction comprises a plurality of tensional elements that are coupled to the framework for attaching the framework to an external support, wherein the tensional elements are selected from a group comprising wires, rods and bars.

9. Surface construction (1) according to claim 8, wherein at least one of the tensional elements runs through one of the longitudinal beams (25).

10. Surface construction (1) according to claim 8 or 9, wherein one or more of the tensional elements is configured to be pre-tensioned.

11. Surface construction (1) according to any one of the preceding claims 5 - 10, wherein the framework is provided with means for coupling to an external geogrid or to an external mount.

12. Surface construction (1) according to any one of the preceding claims 1 - 11 wherein the flexible joint provides a hinge for panels that are interconnected at the peripheral edges.

13. Surface construction (1) according to any one of the preceding claims 1 - 12 wherein additional blind panels are connected in the surface construction mixed in any order with the solar panels (10,11).

14. Landscape element or structure provided with a surface construction (1) according to any one of the preceding claims 1 - 13, mounted on the surface of the landscape element or structure.

15. Landscape element or structure according to claim 14, wherein the surface construction (1) is mounted on a slope (40) of the landscape element or structure.

## Patentansprüche

1. Oberflächenkonstruktion (1) zum Abdecken einer Oberfläche, umfassend mehrere im Wesentlichen starre, rechteckige Solarmodule (10, 11), die Solarzellen umfassen, wobei die Solarmodule (10, 11) benachbart zueinander in einer im Wesentlichen planaren Anordnung angeordnet sind,
**dadurch gekennzeichnet, dass**
jedes Solarmodul (10, 11) eine Umfangskante (20, 22) parallel zur Oberfläche des Solarmoduls (10, 11) aufweist und die Solarmodule (10, 11) miteinander durch überlappende Verbindungen (30) der Umfangskanten (20, 22) jedes Solarmoduls (10, 11) mit einem oder mehreren benachbarten Solarmodulen (10, 11) verbunden sind,
wobei die überlappende Umfangskante (20, 22) des Moduls eine flexible Verbindung umfasst, die wasser- und gasdicht ist, wobei die Verbindung der Umfangskanten (20, 22) mit einer Polymerschicht versiegelt ist, die elastisch ist und eine wasser- und gasdichte Versiegelung bereitstellt.

2. Oberflächenkonstruktion (1) nach Anspruch 1, wobei die Verbindung eine Überlappung der Umfangskanten zwischen benachbarten Solarmodulen (10, 11) umfasst.

3. Oberflächenkonstruktion (1) nach Anspruch 1, wobei die Verbindung ein Verbindungselement umfasst, das zwischen der Umfangskante (20, 22) eines Solarmoduls (10, 11) und der Umfangskante (20, 22) eines benachbarten Solarmoduls (10, 11) verbunden ist, wobei das Verbindungselement zwischen der Umfangskante (20, 22) des einen Solarmoduls (10, 11) und der Umfangskante (20, 22) des anderen Solarmoduls (10, 11) positioniert ist, und die Verbindung des Verbindungselements mit jedem Modul (10, 11) eine Überlappung umfasst.

4. Oberflächenkonstruktion (1) nach Anspruch 1, wobei jedes Modul (10, 11) im Wesentlichen undurchlässig für Wasser und/oder Gas ist.

5. Oberflächenkonstruktion (1) nach einem der vorhergehenden Ansprüche, wobei die Oberflächenkonstruktion ein Gerüst aus mehreren Längsträgern (25) und mehren Querstangen (26) umfasst, wobei die Längsträger sich parallel zueinander in einer ersten Richtung und die Querstangen sich in einer zweiten Richtung senkrecht zur ersten Richtung erstrecken und ein Paar von benachbarten Längsträgern verbinden, wobei jedes Modul (10, 11) im Gerüst zwischen einem Paar von Längsträgern (25) und einem Paar von Querstangen (26) positioniert ist und die Verbindungen in der ersten Richtung zwischen jeder Umfangskante (20, 22) des Moduls (10, 11) und einer benachbarten Querstange (26) gebildet sind und in der zweiten Richtung zwischen jeder Umfangskante (20, 22) und einem benachbarten Längsträger (25) gebildet sind.

6. Oberflächenkonstruktion (1) nach Anspruch 5, wobei die Längsträger (25) einen Ablauf umfassen, der entlang der Länge der Träger verläuft.

7. Oberflächenkonstruktion (1) nach Anspruch 5 oder 6, wobei der Längsträger (25) einen Gehweg auf seiner Oberfläche umfasst.

8. Oberflächenkonstruktion (1) nach einem der vorhergehenden Ansprüche 5 bis 7, wobei die Oberflächenkonstruktion mehrere spannungsbehaftete Elemente aufweist, die mit dem Gerüst verbunden sind, zum Anbringen des Gerüsts an einem externen Halter, wobei die spannungsbehafteten Elemente ausgewählt sind aus einer Gruppe, die Drähte, Stäbe und Stangen umfasst.

9. Oberflächenkonstruktion (1) nach Anspruch 8, wobei mindestens eines der spannungsbehafteten Elemente durch einen der Längsträger (25) läuft.

10. Oberflächenkonstruktion (1) nach Anspruch 8 oder 9, wobei eines oder mehrere der spannungsbehafteten Elemente ausgelegt sind, um vorgespannt zu sein.

11. Oberflächenkonstruktion (1) nach einem der vorhergehenden Ansprüche 5 bis 10, wobei das Gerüst mit Mitteln zum Verbinden mit einem externen Geogitter oder einer externen Halterung bereitgestellt ist.

12. Oberflächenkonstruktion (1) nach einem der vorhergehenden Ansprüche 1 bis 11, wobei die flexible Verbindung ein Scharnier für Module bereitstellt, die an den Umfangskanten verbunden sind.

13. Oberflächenkonstruktion (1) nach einem der vorhergehenden Ansprüche 1 bis 12, wobei zusätzliche Blindplatten in der Oberflächenkonstruktion in beliebiger Reihenfolge mit den Solarmodulen (10, 11) durchmischt verbunden sind.

14. Landschaftselement oder Struktur, bereitgestellt mit einer Oberflächenkonstruktion (1) nach einem der vorhergehenden Ansprüche 1 bis 13, die auf der Oberfläche des Landschaftselements oder der Struktur befestigt ist.

15. Landschaftselement oder Struktur nach Anspruch 14, wobei die Oberflächenkonstruktion (1) an einer Neigung (40) des Landschaftselements oder der Struktur befestigt ist.

## Revendications

1. Construction de surface (1), destinée à recouvrir une surface, comprenant une pluralité de panneaux solaires (10, 11) rectangulaires sensiblement rigides comprenant des cellules solaires, les panneaux solaires (10, 11) étant disposés de manière adjacente les uns aux autres suivant un agencement sensiblement plan,
**caractérisée par**
chaque panneau solaire (10, 11) comportant un bord périphérique (20, 22) parallèle à la surface du panneau solaire (10, 11), et les panneaux solaires (10, 11) étant couplés les uns aux autres par des interconnexions à chevauchement (30) des bords périphériques (20, 22) de chaque panneau solaire (10, 11) avec au moins un panneau solaire adjacent (10, 11),
dans laquelle le bord périphérique à chevauchement (20, 22) du panneau comprend un joint flexible qui est étanche à l'eau et au gaz ; l'interconnexion des bords périphériques (20, 22) étant étanchéifiée par une couche de polymère qui est élastique et qui produit une garniture d'étanchéité à l'eau et au gaz.

2. Construction de surface (1) selon la revendication 1, dans laquelle l'interconnexion comprend un chevauchement des bords périphériques entre des panneaux solaires adjacents (10, 11).

3. Construction de surface (1) selon la revendication 1, dans laquelle l'interconnexion comprend un élément d'accouplement couplé entre le bord périphérique (20, 22) d'un panneau solaire (10, 11) et le bord périphérique (20, 22) d'un panneau solaire adjacent (10, 11), dans laquelle l'élément d'accouplement est positionné entre le bord périphérique (20, 22) d'un panneau solaire (10, 11) et le bord périphérique (20, 22) de l'autre panneau solaire (10,11), et le raccordement de l'élément d'accouplement à chaque panneau (10,11) comprend un chevauchement.

4. Construction de surface (1) selon la revendication 1, dans laquelle chaque panneau (10, 11) est sensiblement imperméable à l'eau et/ou au gaz.

5. Construction de surface (1) selon l'une quelconque des revendications précédentes, dans laquelle la construction de surface comprend un cadre formé d'une pluralité de poutres longitudinales (25) et d'une pluralité de barres transversales (26), dans laquelle les poutres longitudinales s'étendent parallèlement entre elles dans une première direction et les barres transversales s'étendent dans une deuxième direction perpendiculaire à la première direction et relient entre elles une paire de poutres longitudinales adjacentes, dans laquelle chaque panneau (10, 11) est positionné dans le cadre entre une paire de poutres longitudinales (25) et une paire de barres transversales (26), et les interconnexions sont formées dans la première direction entre chaque bord périphérique (20, 22) du panneau (10, 11) et une barre transversale adjacente (26), et dans la deuxième direction entre chaque bord périphérique (20, 22) et une poutre longitudinale adjacente (25).

6. Construction de surface (1) selon la revendication 5, dans laquelle la poutre longitudinale (25) comprend un drain s'étendant sur la longueur de la poutre.

7. Construction de surface (1) selon la revendication 5 ou 6, dans laquelle la poutre longitudinale (25) comprend une passerelle sur sa surface.

8. Construction de surface (1) selon l'une quelconque des revendications précédentes 5 à 7, dans laquelle la construction de surface comprend une pluralité d'éléments de tension qui sont couplés au cadre pour fixer le cadre à un support extérieur, dans laquelle les éléments de tension sont sélectionnés dans un groupe comprenant des fils, des tiges et des barres.

9. Construction de surface (1) selon la revendication 8, dans laquelle l'un au moins des éléments de tension traversent l'une des poutres longitudinales (25).

10. Construction de surface (1) selon la revendication 8 ou 9, dans laquelle l'un au moins des éléments de tension est configuré pour être préalablement tendu.

11. Construction de surface (1) selon l'une quelconque des revendications précédentes 5 à 10, dans laquelle le cadre est muni de moyens pour coupler à une géogrille extérieure ou à un support extérieur.

12. Construction de surface (1) selon l'une quelconque des revendications précédentes 1 à 11, dans laquelle le joint flexible produit une articulation destinée à des panneaux qui sont interconnectés au niveau des bords périphériques.

13. Construction de surface (1) selon l'une quelconque des revendications précédentes 1 à 12, dans laquelle des panneaux aveugles supplémentaires sont raccordés dans la construction de surface mélangés dans n'importe quel ordre aux panneaux solaires (10, 11).

14. Élément ou structure de paysage doté d'une construction de surface (1) selon l'une quelconque des revendications précédentes 1 à 13, monté sur la surface de l'élément ou de la structure de paysage.

15. Élément ou structure de paysage selon la revendication 14, dans lequel la construction de surface (1) est montée sur une pente (40) de l'élément ou de la structure de paysage.
